# EUROPEAN PATENT APPLICATION

(11) **EP 4 763 306 A1**
(43) Date of publication of application: **24.06.2026**
(21) Application number: 24221627.3
(22) Date of filing: 19.12.2024
(51) Int. Cl.: B01D 24/12, B01D 35/30, C02F 1/00

(54) **DEVICE FOR THE FILTRATION OF A LIQUID, FILTER CARTRIDGE FOR SUCH A FILTERING DEVICE AND USE THEREOF**

(71) Applicant: BRITA SE, 65232 Taunusstein (DE)
(72) Inventor: Zöller, Jochen, 65232 Taunusstein (DE); Libera, Philipp, 65232 Taunusstein (DE); Hagen, Thomas, 65232 Taunusstein (DE)

(57) **Abstract**

A filtering device 1 comprising a funnel 3, a filter cartridge 7 and a cup 5, comprises first connecting members 76 for directly connecting the filter cartridge 7 to a lower end of the funnel 3. According to the invention, the filter cartridge 7 is accommodated in the cup 5, and the filtering device 1 further comprises second connecting members 73, for directly connecting the cup 5 to the filter cartridge 7 to form a filter unit 8 that is held in an operating position at the bottom 33 of funnel 3 only by the first connecting members 76.

The tolerance chain is minimized, since only respective two components need to be matched. Coupling can be carried out in a single pass, by inserting the filter cartridge into the cup and then coupling the filter cartridge with the bottom of funnel 3, e.g. by performing a single rotary movement.

## Description

### FIELD OF INVENTION

The present invention generally relates to the filtration of liquids, such as water, and relates more specifically to a device for the filtration of a liquid, to a filter cartridge for such a filtering device and to a use thereof.

### BACKGROUND OF INVENTION

EP 3 838 374 A1 discloses a device for the filtration of a liquid according to the preamble of claim 1, which is gravity-driven and comprises a filter cartridge having a filtering material for filtering the liquid, a cup, and a funnel for collecting the liquid to be filtered. More specifically, the funnel is a two-part funnel formed by the funnel disposed at the upper end and a lower cup disposed below the funnel. The filter cartridge is placed in the lower cup, which is then attached to the lower end of the funnel in a form-fitting manner, using a bayonet lock. For replacement of the filter cartridge, the lower cup is removed and the filter cartridge is taken out of the lower cup.

To prevent the formation of bypasses, the filter cartridge needs to be sealed to the upper funnel reliably by means of a seal and held in sealed operating position by the cup. For this purpose, the filter cartridge needs to be pressed firmly against the lower end of the funnel by the lower cup. This means that tight tolerances of the components are required to ensure the sealing function reliably in series production. The two-part funnel also has a strong influence on the selection of materials for establishing a reliable connection between the funnel and lower cup by means of a thread or bayonet mechanism.

DE 19915829 A1 discloses a filter cartridge that is latched to the bottom of a funnel using a bayonet locking mechanism, which includes a plurality of windows in a ring on the upper end of the filter cartridge and corresponding radial protrusions on a mounting ring provided at the bottom of the funnel. The filter cartridge is directly connected to the bottom of the funnel, but not accommodated in a cup.

WO 2012 150466 A1 discloses another filter cartridge that is directly connected to the bottom of the funnel by means of a bayonet locking mechanism. The combination of the funnel and filter cartridge is then accommodated in a jug, which collects the filtered water.

A similar filtering device is disclosed in US 6638426 B1.

### SUMMARY OF INVENTION

It is an object of the present invention to provide a device for the filtration of a liquid that has a simple and cost-efficient configuration and enables an enhanced operation. Further aspects of the invention relate to a filter cartridge for use in such a filtering device and the use of such a filter cartridge in a device for the filtration of a liquid.

These problems are solved by a device for the filtration of a liquid as claimed by claim 1, by a filter cartridge for use in such a filtering device as claimed by claim 11, and by using such a filter cartridge in a device for the filtration of a liquid as claimed by claim 14. Further advantageous embodiments are the subject-matter of the dependent claims.

According to the present invention there is provided a device for the filtration of a liquid (filtering device), comprising a funnel for collecting the liquid to be filtered, a filter cartridge having a filtering material for filtering the liquid and a cup. The filtering device comprises first connecting members configured for directly connecting the filter cartridge detachably to a lower end of the funnel in a form-fitting manner. According to the present invention the filter cartridge is accommodated in the cup, and the filter device further comprises second connecting members configured for directly connecting the cup detachably to the filter cartridge in a form-fitting manner for forming a filter unit so that the filter unit is held in an operating position at the lower end of the funnel by connecting the filter cartridge to the lower end of the funnel by the first connecting members.

In other words, according to the present invention the funnel and cup are not directly connected or coupled to each other. Rather, the filter cartridge is directly connected or coupled to the funnel, more particularly to the bottom of the funnel, via first connecting members by positive-fit, while the filter cartridge is directly connected or coupled to the cup via second connecting members by positive-fit.

In the operating position, the upper end of the filter cartridge, particularly a lid covering the upper end of the filter cartridge, may be firmly pressed against the bottom or lower end of the funnel in a manner to prevent the formation of bypasses, which would otherwise cause the water to flow from the funnel not only into the filter cartridge but also to the environment, particularly directly into the cup. For this purpose, it is preferred that the upper end of the filter cartridge is firmly pressed against the bottom or lower end of the funnel in a sealed manner, such that the upper end of the filter cartridge is fluid-tight sealed against the environment, so that that the water can only flow into the filter cartridge for filtration.

According to the present invention, the tolerance chain can be minimized, since only respective two components need to be matched, namely the cup with the filter cartridge and the filter cartridge with the bottom of the funnel. Furthermore, since the coupling at the funnel and cup can be implemented quite easily and with simple coupling members, it is easier to use different materials for the main components of the filtering device, namely the funnel, filter cartridge and cup. The material pairing at the contact point between the funnel and the cup is "interrupted" by the filter cartridge, thus preventing an insufficient quality appearance or wear. The filter cartridge may be made e.g. of polypropylene (PP), which is normally tough and flexible, especially when copolymerized with ethylene, and offers the advantage of low costs and good thermal and chemical properties.

The positive-fit coupling between the main components of the filtering device can be accomplished by means of a bayonet-type locking mechanisms. But any other positive-fit locking mechanisms may be used as well, which offers a high degree of flexibility in designing the filtering device. The positions of the male and female connecting members required for such a positive-fit may be disposed at appropriate positions of the main components, namely the funnel, particularly the bottom of the funnel, the filter cartridge, in particular the upper end and/or side walls of the filter cartridge, and cup, in particular the upper end and/or inner side wall of the cup.

According to a further embodiment, the first connecting members comprise first connecting pieces provided at an upper end of the filter cartridge and corresponding first connecting counter pieces provided at the lower end of the funnel, which are configured to cooperate with the first connecting pieces in a form-fitting manner, for directly connecting the filter cartridge to the lower end of the funnel in a form-fitting manner. The first connecting pieces and first connecting counter pieces may be male or female, such as protrusions or recesses or openings, and have a shape matched to each other to enable a proper positive-fit. Such protrusions or recesses may extend in radial direction, but may also extend in other directions, particularly in axial direction. Preferably, the first connecting pieces and first connecting counter pieces are formed integrally with the respective main component of the filtering device at suitable positions, in particular at the bottom of the funnel and/or at a lid covering an otherwise open upper end of the filter cartridge.

According to a further embodiment, the second connecting members comprise second connecting pieces provided at the upper end of the filter cartridge or on a side wall of the filter cartridge and corresponding second connecting counter pieces provided in a side wall of the cup, which are configured to cooperate with the second connecting pieces, for directly connecting the filter cartridge to the cup in a form-fitting manner to form the filter unit. The second connecting pieces and second connecting counter pieces may be male or female, such as protrusions or recesses or openings, and have a shape matched to each other to enable a proper positive-fit. Such protrusions or recesses may extend in radial direction, but may also extend in other directions, particularly in axial direction. Preferably, the second connecting pieces and second connecting counter pieces are formed integrally with the respective main component of the filtering device at suitable positions, in particular at a lid covering an otherwise open upper end of the filter cartridge and/or at an inner surface of the side wall of the cup.

According to a further embodiment, the upper end of the filter cartridge is formed integrally as a lid, wherein the lid covers the upper end of the filter cartridge and comprises openings through which the liquid to be filtered can flow out of the funnel into the filter cartridge. The lid may be made of a plastic material of sufficient material strength, bearing both the first and second connecting pieces or connecting counter pieces.

According to a further embodiment, the first connecting members and the first connecting counter pieces are configured for latching the filter cartridge to the funnel, so that the filter cartridge is directly connected to the lower end of the funnel in the operating position in a rotationally fixed manner and/or at a fixed axial position. Such a latching helps to prevent an inadvertent unlocking of the filter cartridge from the funnel, and more stably secures the operating position to ensure a reliably operation of the filtering device.

According to a further embodiment, the second connecting members and the second connecting counter pieces are configured for latching the filter cartridge to the cup, so that the filter cartridge is directly connected to the cup in the operating position in a rotationally fixed manner and/or at a fixed axial position. Such a latching helps to prevent an inadvertent unlocking of the filter cartridge from the funnel, and more stably secures the operating position to ensure a reliably operation of the filtering device.

According to a further embodiment, the first connecting pieces and the first connecting counter pieces are formed as a first plug-in/rotary connection device configured for connecting the filter cartridge to the lower end of the funnel by pushing the filter cartridge to the lower end of the funnel and performing a rotation, and the second connecting pieces and the second connecting counter pieces are formed as a second plug-in/rotary connection device configured for connecting the filter cartridge to the cup by pushing the filter cartridge to cup and performing a rotation, wherein the first plug-in/rotary connection device and the second plug-in rotary connection device are configured such that, after the filter cartridge has been inserted into the cup, by performing a relative rotation between the funnel and the cup the filter cartridge can be transferred from a non-locked initial position into a locked operating position, in which the filter cartridge is locked to the lower end of funnel, and the relative rotation between the funnel and the cup simultaneously transfers the cup from a non-locked initial position to a locked operating position in which the filter cartridge is locked to the cup. The first and second plug-in/rotary connection device preferably is each formed as a bayonet mechanism, and the direction of rotation for actuating both bayonet mechanisms is preferably the same, so that locking the cup with the filter cartridge and the filter cartridge with the bottom of the funnel can be accomplished simply by performing a single rotary movement. To this end, the coupling strength of each bayonet mechanism may be selectively chosen that upon rotation of the cup into the opposite direction (for removal and replacement of the filter cartridge) the filter cartridge remains coupled with the cup. The filter unit, consisting of the filter cartridge and the cup, may then be removed from the funnel, and afterwards the filter cartridge may be released from the cup by performing a second rotary movement.

According to a further embodiment, the first connecting pieces comprise a first number n of first radial projections is formed on the lid, where n is an integer greater than or equal to 2, and the non-locked initial position of the filter cartridge is defined by n axial grooves in the side wall of the cup, which each have a predetermined length h1, and wherein the second connecting pieces comprise a second number m of second radial projections are formed on an upper side of the lid, m being an integer greater than or equal to 2, the m second radial projections projecting by a predetermined distance h2 from the upper side of the filter cartridge. In such an embodiment, forces, in particular forces acting in axial direction, can be distributed more uniformly, thus enabling a more uniform and reliable sealing effect between the lid of the filter cartridge and the bottom of the funnel. Here, the predetermined distance h2 may correspond to the predetermined length h1, but may also be slightly smaller than h1, to ensure a suitable elastic deformation of a sealing member that is held clamped between the lid of the filter cartridge and the bottom of the funnel.

According to a further embodiment, the second connecting counter pieces are formed as grooves in the side wall of the cup, wherein the grooves each comprise an axial insertion groove and a latching groove extending perpendicular to the axial insertion groove, which enables a very simple and cost-efficient bayonet locking mechanism.

According to a further embodiment, the first connecting counter pieces are formed as recesses in the lower end of the funnel, which cooperate with corresponding protrusions at the filter cartridge, in particular at a flange-like peripheral portion of an integral lid, which also enables a very simple and cost-efficient bayonet locking mechanism.

According to a further embodiment, each latching groove may comprise two adjacent oppositely slanted bevels with a vertex formed between the two adjacent oppositely slanted bevels, which helps to prevent an inadvertent unlocking of the filter cartridge from the cup, e.g. when the filter unit, consisting of the filter cartridge and the cup locked to the filter cartridge, shall be removed from the funnel for subsequent replacement of the filter cartridge. The coupling strength of the locking between the cup and filter cartridge may be defined by the maximum altitude and inclination of the bevels and by the altitude of the vertex relative to the bottom of the latching groove.

According to a further embodiment, each recess in the lower end of the funnel may be limited by a stop member at a first end thereof protruding from the lower end of the funnel in an axial direction and by an oblique insertion bevel formed at second end thereof opposite to the first end. The stop member assists in defining a fixed rotary position of the afore-mentioned filter unit relative to the funnel, whereas the insertion bevel may be used to adjust the forces required for locking the filter unit to the bottom of the funnel, e.g. by proper selection of the inclination and height of the insertion bevel and of the respective friction pairing at this position.

According to a further embodiment, in the operating position a seal is clamped between the lower end of the funnel and the upper end of the filter cartridge, for sealing the filter cartridge against the environment.

According to the present invention there is also provided a filter cartridge for a device for the gravity-operated filtration of a liquid, which comprises a funnel for collecting the liquid to be filtered and a cup for accommodating the filter cartridge therein, wherein a filtering material is provided in the filter cartridge for filtering the liquid to be filtered, and the filter cartridge comprises first connecting members configured for directly connecting the filter cartridge detachably to a lower end of the funnel in a form-fitting manner. According to the present invention second connecting members are provided on the filter cartridge configured for directly connecting the filter cartridge to the cup detachably and in a form-fitting manner for forming a filter unit so that the filter unit is held in an operating position at the lower end of the funnel by the first connecting members. The filter cartridge is thus of a configuration as outlined above and described in more detail in the following.

According to a further embodiment, the first connecting members and the second connecting members are provided at an upper end of the filter cartridge, in particular at a lid covering an otherwise open upper end of the filter cartridge.

According to a further embodiment, the upper end of the filter cartridge is formed integrally as a lid, wherein the lid covers the upper end of the filter cartridge and comprises openings through which the liquid to be filtered can flow out of the funnel into the filter cartridge.

A further related aspect of the present invention relates to the use of the afore-mentioned filter cartridge as described hereinunder in a device for the filtration of a liquid, which comprises a funnel for collecting the liquid to be filtered and a cup for receiving the filter cartridge therein, wherein a filtering material for filtering the liquid to be filtered is provided in the filter cartridge, comprising the steps of: inserting the filter cartridge into the cup, and inserting the filter unit into a lower end of the funnel, wherein the filter cartridge is directly connected to the cup detachably and in a form-fitting manner by the first connecting members to form the filter unit, and the filter cartridge is directly connected to a lower end of the funnel detachably and in a form-fitting manner by the first connecting members, so that the filter unit is held in an operating position at the lower end of the funnel.

According to a further embodiment, by performing a relative rotation between the funnel and the cup, the filter cartridge is transferred from a non-locked initial position into a locked operating position, in which the filter cartridge is locked with the funnel, and the same relative rotation simultaneously drives the locking of the filter cartridge with the cup, to transfer the cup from a non-locked initial position to a locked operating position, in which the filter cartridge is locked with the cup.

### OVERVIEW ON DRAWINGS

Hereinafter, the preferred embodiments according to the present invention will be described in an exemplary manner and with reference to the accompanying drawings, wherein:
- Fig. 1a: is an exploded schematic view showing the main components of a filter unit of a filtering device according to the present invention;
- Fig. 1b: shows the filter unit of Fig. 1a in an assembled state;
- Fig. 2a: shows a filtering device according to a first embodiment according to the present invention, which is accommodated in a jug in a use state;
- Fig. 2b: is a partial cross-section of the filtering device of Fig. 2a, which is accommodated in a jug in a use state;
- Fig. 3: is a perspective view from above of a cup for holding a filter cartridge in the first embodiment;
- Fig. 4: shows a filter cartridge to be coupled with and accommodated in the cup of Fig. 3;
- Fig. 5: is a perspective view from above, showing a filter unit with a cup according to Fig. 3 and a filter cartridge according to Fig. 4 accommodated in the cup in a locked position;
- Fig. 6: is a perspective plan view of a funnel for connection to the filter unit of Fig. 5;
- Fig. 7: is an explosive view showing the filter unit of Fig. 5 and the lower end of the funnel of Fig. 6; and
- Fig. 8: is a schematic sectional view showing the coupling of the filter unit according to Fig. 5 to the bottom of the funnel of Fig. 6 in the locked operating position of the filtering device according to the present invention.

Throughout the drawings, the same reference numerals designate identical or technically equivalent elements or groups of elements.

### DETAILED DESCRIPTION OF PREFERRED EMBODIMENTS

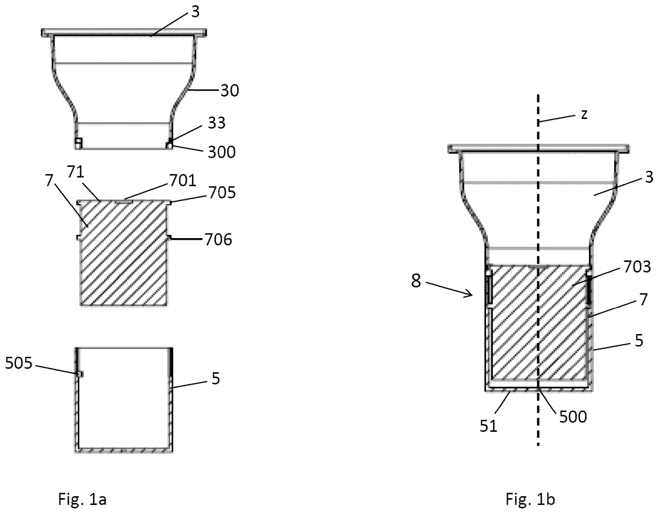

As shown in Figs. 1a and 1b, a filtering device according to the present invention generally comprises as main components a funnel 3 for collecting water to be filtered, a cup 5 and a filter cartridge 7 which comprises a filtering material 703 and is accommodated in the cup 5 in the operating position shown in Fig. 1b, preferably with a spacing along center line z between the bottom 500 of the cup 5 and the bottom of the filter cartridge 7. The filter cartridge 7 and the cup 5 preferably have a cylindrical shape, but may also have a different profile. In the operating position shown in Fig. 1b, these main components are disposed in a stapled condition aligned along the central axis z. The upper end of the filter cartridge 7 is covered by a lid 71, which forms a closed surface but includes at least one inlet 701 for water to be filtered and which is preferably integrally formed from a plastic material that may provide a certain flexibility. In the operating position, the lid 71 is firmly pressed against the circumferential bottom 33 of the funnel 3 in a sealed manner to prevent the formation of bypasses, so that water can flow from the funnel 3 into the filter cartridge 7 only via inlet 701. For this purpose, a sealing may be clamped firmly between the lower end of the funnel 3 and the lid 71.

According to the present invention, the filter cartridge 7 is directly and detachably connected to the cup 5 in a form-fitting manner, to form a filter unit 8 that is attached to the bottom 33 of the funnel 3. For connecting the filter unit 8 to the bottom 33 of the funnel 3, it is not the cup 5 that is directly connected to the bottom 33 of the funnel 3, but the filter cartridge 7 that is connected detachably and directly to the bottom 33 of the funnel 3 in a form-fitting manner.

As the filter cartridge 7 is directly connected to the bottom 33 of funnel 3 in a form-fitting manner, using e.g. a bayonet mechanism, locking mechanism or the like, and the cup 5 is attached to the filter cartridge 7 in a form-fitting manner, using e.g. also a bayonet mechanism, locking mechanism or the like, a functional interaction between the funnel, cartridge and cup is established which helps to minimize the tolerance chain between the main components 3, 5 and 7, since only two components have to be matched to each other, namely the filter cartridge 7 and the funnel 3. Furthermore, since the counter pieces for the positive-fit connection at the funnel 3 and cup 5 are quite easy to manufacture, it is easier to use different materials for the above-mentioned main components 3, 5 and 7. The material pairing at the contact point between the funnel 3 and the cup 5 is "interrupted" by the filter cartridge 7, preventing an inadequate quality impression or wear. E.g. the filter cartridge 7 may be made of polypropylene (PP), which is normally tough and flexible, especially when copolymerized with ethylene, and offers the advantage of low costs and good thermal and chemical properties.

As shown in Fig. 1a, the filter cartridge 7 comprises first and second connecting pieces 705, 706, each configured for a positive-fit coupling with a corresponding counter piece, as outlined below in more detail. It must be emphasized that the positions of the first and second connecting pieces 705, 706 shown in Fig. 1a are only exemplary and shall not delimit the present invention. In particular for the case that the housing of the filter cartridge 7 is not rigid but formed e.g. by a sachet consisting e.g. of a liquid-permeable membrane accommodating a loose filtering material 703 having no fixed shape, the first and second connecting pieces 705, 706 may be provided directly at the lid 71, which is generally formed of a plastic material having a sufficient mechanical strength. For other embodiments, where the housing of the filter cartridge 7 is rigid or comprises portions provided at fixed positions relative to the lid 71, the first and/or second connecting pieces 705, 706 may also be provided on the outer surface of the housing, as indicated for the second connecting pieces 706 in Fig. 1a.

The filtering material 703 of the filter cartridge 7 may be loose matter. The loose matter can be particulate or fibrous matter, or a mixture of the two. This matter can be relatively fine, thus presenting a relatively large surface area and forming relatively small voids. Alternatively, the encapsulated filtering material 703 may be relatively loosely bound particulate or fibrous matter, e.g. reticulated matter. The housing may also encapsulate any particulates that have become detached. The housing of the filter cartridge 7 thus separates the filtering material 703 including the at least one liquid treatment medium from the environment. The housing may include sections pervious to a liquid, allowing liquid to pass through the housing to contact the filtering material 703 for liquid treatment. Thus, the liquid is treated on its way through the filter cartridge by contacting the filtering material 703 for liquid treatment.

As shown in Figs. 1a and 1b, in the operating position first connecting pieces 706 provided at the filter cartridge 7 are engaged with corresponding first connecting counter pieces 505 provided at the cup 5 so that the filter cartridge 7 is directly connected to the cup 5 in a form-fitting manner, while the second connecting pieces 705 provided at the filter cartridge 7 are engaged with corresponding second connecting counter pieces 300 provided at the lower end of the funnel 3 so that the filter cartridge 7 is directly connected to the funnel 3 in a form-fitting manner. A gap or nip may be provided between the lower end of the funnel 3 and the upper end of the cup 5, and between the bottom 500 of the cup and the bottom of the filter cartridge 7. Preferably, in the operating position the upper end of the filter cartridge 7 is pressed against the lower end of funnel 3 firmly so that a fluid-tight sealing against the environment is accomplished, as outlined below in more detail, to prevent bypasses between the upper end of the filter cartridge 7 and the environment.

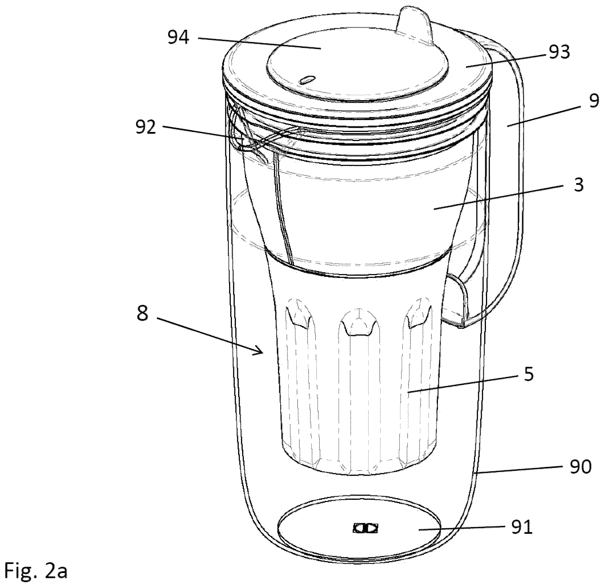

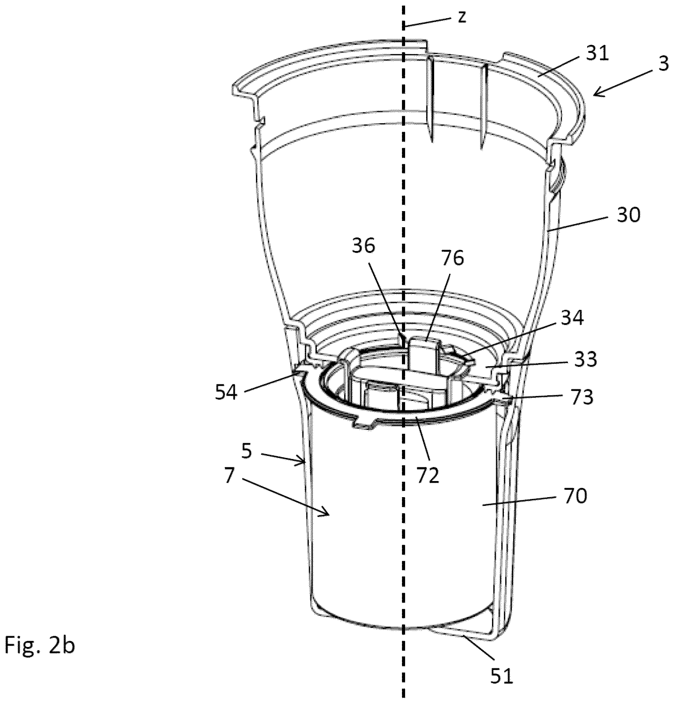

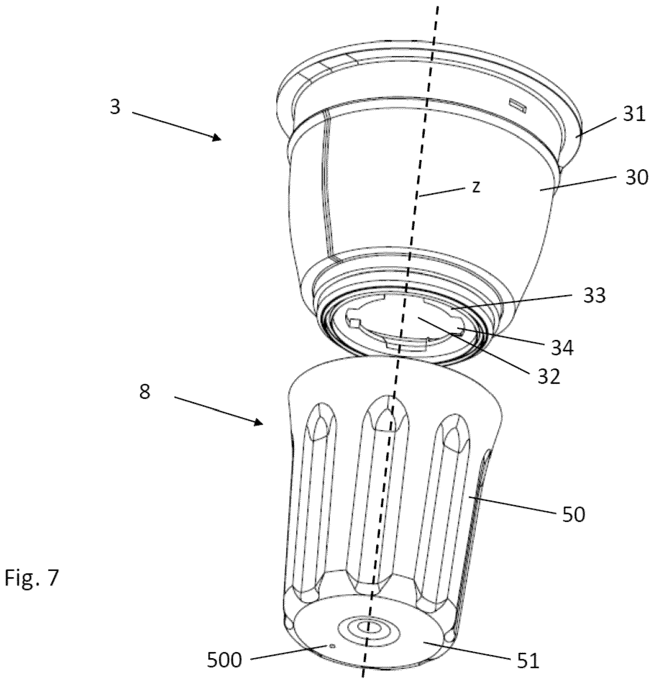

As shown in Figs. 2a and 2b, in operation the filter unit 8 is attached to the lower end of funnel 3, which rests on the upper rim of a jug 9. The open upper end of funnel 3 is covered by a cover 93 having a central opening covered by a closure 94. By opening the closure 94, water can be poured into the funnel 3, from where it flows through the filtering material provided inside the filter unit 8, and the filtered water flows out of the cup 5 via outlet openings 500 (cf. Fig. 7) into the jug 9, which collects the filtered water. Filtered water can be poured out of jug 9 via spout 92.

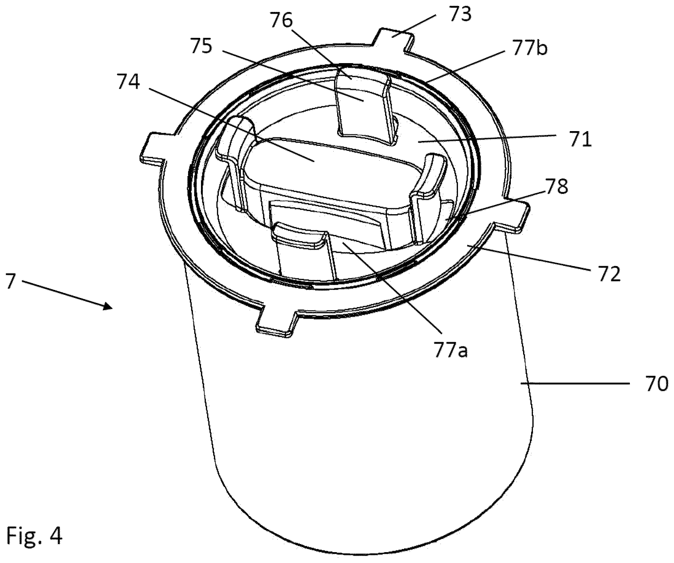

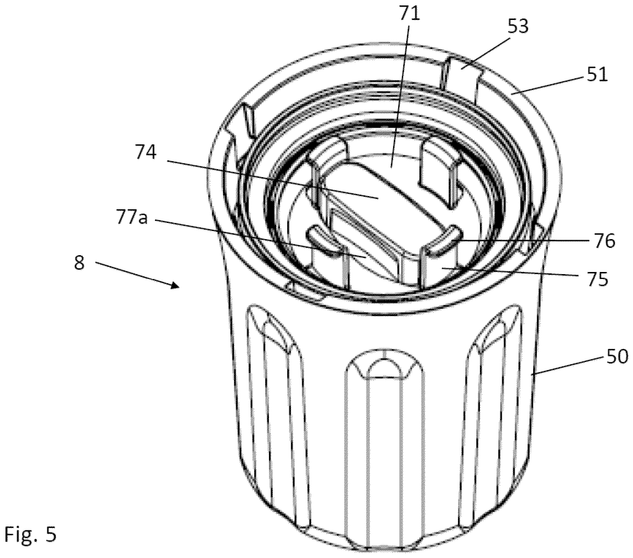

More details of a filter cartridge 7 according to a first embodiment of the present invention are shown in Fig. 4. The filter cartridge 7 generally has a cylindrical shape and consists of a housing, which is formed by a bottom and a circumferential side wall 70 and accommodates a filtering material for liquid treatment, and a lid 71, which covers the open upper end of this housing. A central transverse web 74 may project from the upper surface of lid 71 and may be used to be gripped by fingers e.g. for twisting the lid 71. Axial webs 75 project from the upper surface of lid 71 having free ends formed as radial projections 76 projecting perpendicular (or under a suitable acute angle) from the axial webs 75 and serving as first connecting members for detachably connecting the filter cartridge 7 directly to the bottom 33 of funnel 3, as shown in Fig. 2b. At least one recess 78, 77a is formed in the lid 71 through which water flows into the filter cartridge 7. Moreover, at least one venting opening 77b is provided in lid 71. The periphery of lid 71 may be formed as a circumferential flange slightly protruding beyond the side wall 70. Radial projections 73 project from this flange 72 in radial direction (or under a suitable acute angle), serving as second connecting members for detachably connecting the filter cartridge 7 to the cup 5 as shown in Fig. 5. The radial projections 73, 76 are preferably provided at equiangular spacing and may be aligned in radial direction, as shown in Fig. 4. The minimum number of the radial projections 73, 76 is two, and preferably a total of four radial projections 73, 76 is provided at lid 71. The radial projections 73, 76 form two bayonet mechanisms which cooperate with corresponding counter pieces in a form-fitting manner to connect the filter cartridge 7 to the bottom 33 of funnel 3 and to the inner side wall of cup 5, respectively, as shown in Fig. 2b.

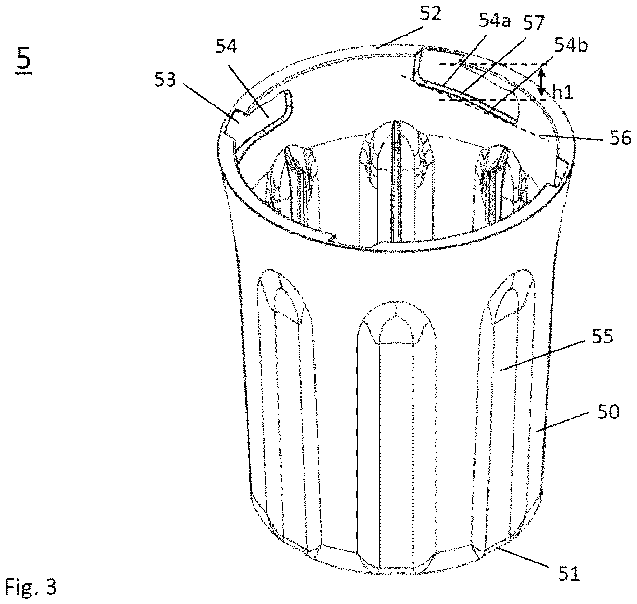

More details of the cup 5 are shown in Fig. 3. The cup 5 is formed by a circumferential side wall 50 and a closed bottom 51, in which at least one outlet opening 500 (cf. Fig. 7) may be provided as an outlet for filtered water. A plurality of axial depressions 55 may be formed in the side wall 50, for stiffening the side wall 50. A plurality of axial insertion grooves 53, each of a length h1, is formed in the inner surface of side wall 50, from where locking grooves 54 extend in circumferential direction, preferably perpendicular to the axial grooves 53. The grooves 53, 54 serve as counter pieces for the radial projections 73 of the filter cartridge 7, to provide a bayonet mechanism that can be locked by relative rotation between the cup 5 and filter cartridge 7.

For locking the cup 5 to the filter cartridge 7, the filter cartridge 7 is inserted into the cup 5 in a rotary position in which the radial projections 73 are aligned with the corresponding insertion grooves 53. The filter cartridge 7 is further pushed into the cup 5 until the radial projections 73 abut against the lower ends of the insertion grooves 53. Then a relative rotation between the cup 5 and filter cartridge 7 is performed so that the radial projections 73 slide along the locking grooves 54 until the radial projections 73 abut against dead ends of the locking grooves 74, which then define a predetermined fixed rotary position of the filter cartridge 7 with respect to the cup 5.

As shown in Fig. 3, the bottom of the locking grooves 54 may each form two adjacent oppositely slanted bevels 54a, 54b with a vertex 57 formed between the two adjacent oppositely slanted bevels 54a, 54b, for latching the filter cartridge 7 to the cup 5 in a predetermined fixed rotary position defined by the more remote slanted bevel 54b and vertex 57.

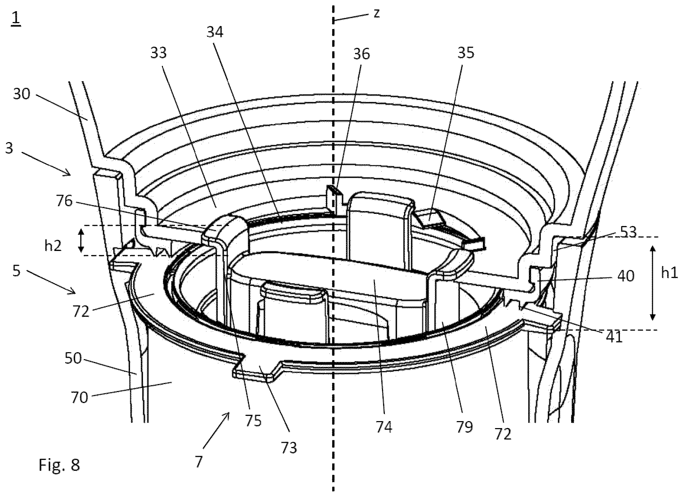

Fig. 5 shows a filter unit 8 formed by the filter cartridge 7 and cup 5 in a locked position. The vertices 57 of the locking grooves 54 shown in Fig. 3 may serve for preventing an inadvertent removal of the filter cartridge 7 from cup 5 by an inadvertent rotation in opposite direction, the latching strength being defined particularly by the height of the vertices 57. In this locked position, the radial projections 76 are at a level above the upper surface of lid 71 which is sufficient for the radial projections 76 to later grip behind the bottom 33 of funnel 3, as shown in Fig. 8.

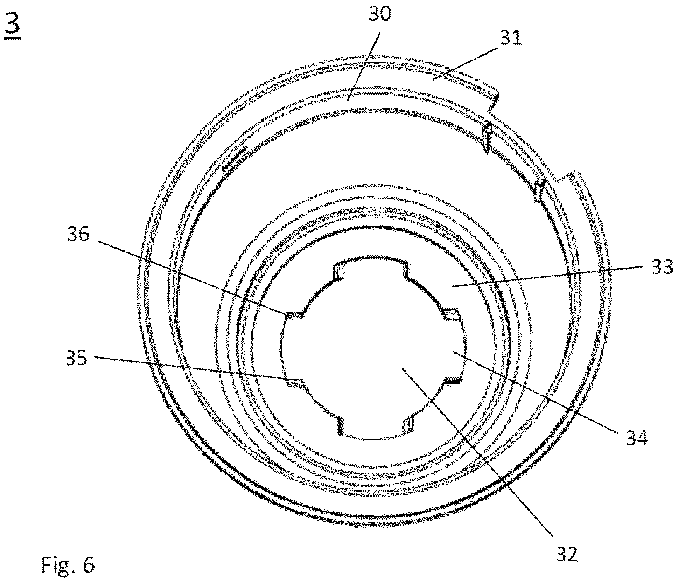

More details of the funnel are shown in Figs. 6 to 8. The funnel 3 is formed by a circumferential side wall 30 having a flange-like circumferential bottom 33 at its lower end, which projects radially inward. A central opening 32 is defined by the circumferential bottom 33, through which water flows into the filter cartridge. A plurality of radial recesses 34 is formed in bottom 33, preferably at equiangular spacing, in correspondence to the radial projections 76 of the filter cartridge 7 shown in Fig. 4. A flange-like upper edge 31 projects from side wall 30 at the upper end of funnel 3, for abutment on the upper end of jug 9 (cf. Fig. 2a) in operation.

As shown in Fig. 8, each recess 34 may be limited by a stop 36 at a first end, protruding in axial direction from bottom 33, and a slanted insertion bevel 35 at a second end opposite to the first end. The recesses 34 serve as first counter connecting pieces that cooperate with the radial projections 76 of the filter cartridge in a form-fitting manner to lock the rotary position of the filter cartridge in the sealed operating position.

For locking the filter unit 8 shown in Fig. 5 to the bottom 33 of funnel 3, the radial projections 76 of the filter cartridge 7 are brought in alignment with the recesses 34 of the funnel and then the filter unit 8 is pushed towards the funnel 3 until the radial projections 76 abut against the insertion bevels 35. Then a relative rotation between the filter unit 8 and funnel 3 is performed, so that the radial projections 76 slide along the insertion bevels 35 and the upper surface of bottom 33, until the radial projections 76 abut against the vertical stops 36, which then define a predetermined fixed rotary position of filter unit 8 relative to funnel 3. During this rotation, when the radial projections 76 slide along the insertion bevels 35, the distance between the upper surface of the bottom 33 and the upper surface of flange 72 is decreased, so that the sealing 40 is deformed and compressed in the direction of central axis z to achieve a sealing effect.

Fig. 8 is a schematic sectional view showing the coupling of the filter unit 8 to the bottom 33 of funnel 3 in the locked operating position of the filtering device according to the present invention. In the locked operating position, a sealing 40 is clamped by resilient deformation between the bottom 33 of funnel 3 and lid 71 of the filter cartridge 7, for sealing the filter cartridge 7 against the environment and prevent bypasses between the environment and the lid 71 of filter cartridge 7. More specifically, the sealing 40 may be clamped between the flange 72 of lid 71 and the lower surface of bottom 33. The sealing 40 may comprise a plurality of sealing lips 41 that are resiliently deformed when the sealing 40 is held clamped, for further enhancing the sealing effect. In the sealed operating position, a predetermined distance h2 is defined between the upper surface of the bottom 33 (on which the lower surfaces of the radial projections 76 rest) and the upper surface of flange 72, wherein distance h2 may correspond to the axial length h1 of the axial insertion grooves 53 or may be slightly smaller than h1.

While the coupling of the main components 3, 5 and 7 of the filtering device has been described above as a two-step procedure, the configuration of these main components 3, 5 and 7 as described above also allows to couple the main components 3, 5 and 7 of the filtering device also in a much more convenient single-step procedure, as follows: firstly, the filter cartridge 7 is inserted into cup 5 by inserting the radial projections 73 into the corresponding axial insertion grooves 53 of cup 5. In the same rotary position the unit consisting of the filter cartridge 7 inserted into cup 5 is inserted into the bottom 33 of funnel 3 by bringing the radial projections 76 in alignment with the corresponding recesses 34 in the bottom 33 of funnel 3 and pushing the unit consisting of the filter cartridge 7 inserted into cup 5 further into the funnel 3 until the radial projections 76 are generally flush with the upper surface of bottom 33 or contact the upper surfaces of the slanted insertion bevels 35. Then a single rotary movement is performed by twisting the cup 5 relative to funnel 3, which causes the radial projections 73 of the filter cartridge 7 to slide along the locking grooves 54 of cup 5 and at the same time causes the radial projections 76 of the filter cartridge to slide along the slanted insertion bevels 35 and the upper surface of the bottom 33 of funnel 3. This rotation is performed until the radial projections 76 abut against the vertical stops 36 (to define a predetermined rotary position of filter cartridge 7 relative to funnel 3) and until the radial projections 73 abut against dead ends of the locking grooves 74 (to define a predetermined rotary position of the filter cartridge 7 with respect to the cup 5). Preferably, this joint rotary movement is driven by twisting the cup 5 relative to funnel 3.

In other words, by performing a relative rotation between the funnel 3 and the cup 5, the filter cartridge 7 is transferred from a non-locked initial position into a locked operating position, in which the filter cartridge 7 is locked with the funnel 3, and performing this relative rotation also serves for simultaneously transferring the cup 5 from a non-locked initial position to a locked operating position, in which the filter cartridge 7 is locked with the cup 5.

As will become apparent to the skilled person when studying the above disclosure, abutment of the radial projections 73 against dead ends of the locking grooves 74 may be used to drive the afore-mentioned rotary movement of the radial projections 76 of the filter cartridge 7 relative to the bottom 33 of funnel 3. For such an embodiment, it is not necessary that the radial projections 76 abut against the vertical stops 36 in the sealed operating position. Further parameters enabling the afore-mentioned single-step procedure may be defined by the height of the locking grooves 54 in axial direction, by the inclination of the insertion bevels 54a, 54b, the level of the vertices 57 above the bottom of the locking grooves 54 and the frictional pairing between the material of the lid 71 of filter cartridge 7 and the material of cup 5.

As will become apparent to the skilled person when studying the above disclosure, a filtering device according to the present invention may be gravity-driven, i.e. gravity causes the liquid to flow through the filter cartridge. Of course, in such a filtering device the liquid may also be caused by pressure or negative pressure to flow through the filter cartridge.

While the positive-fit coupling between the main components 3, 5 and 7 of the filtering device has been disclosed above mainly with reference to a bayonet-type locking mechanism, it will become apparent to the skilled person that the positive-fit coupling between the main components 3, 5 and 7 of the filtering device may also be accomplished by means of other locking mechanisms. For example, instead of the radial projections 73 (cf. Fig. 4) the lid 71 may comprise a plurality of recesses or openings, like the openings 78 shown in Fig. 4, that cooperate with corresponding hooks formed at the bottom 33 of funnel 3. The filter cartridge 7 may be coupled to the bottom 33 of funnel 3 simply by bringing the recesses or openings in alignment with the corresponding hooks formed at the bottom 33 of funnel 3 and pushing the filter cartridge 7 towards the funnel 3, until the hooks are latched with the corresponding recesses or openings in lid 71. Moreover, the cup 5 can be coupled with the filter cartridge 7 by means of at least one flexible bracket formed e.g. at or near the upper end of the cup 5 that cooperates with the lid 71. E.g. each flexible bracket may be latched with the flange-like upper end 72 of lid 71 in a positive-fit manner, which would then have a profile closely matching the at least one bracket to enable a firm coupling. In such an alternative embodiment, the main components 3, 5 and 7 of the filtering device may be coupled with each other by performing solely a linear displacement along the central axis 7. In such an embodiment, the connecting members are preferably configured for coupling both the cup 5 with the filter cartridge 7 and the filter cartridge 7 with the bottom 33 of the funnel in a single linear displacement along the central axis 7. Of course, also a combination of a linear relative displacement and rotation may be provided. In any case, it is preferred that the coupling members for coupling the filter cartridge 7 with the cup 5 and funnel 3 are each provided at the upper end of the filter cartridge 7, in particular on a lid 71 made of plastic material offering a sufficient mechanical strength, because such a design offers a high degree of freedom for the design for the housing of the filter cartridge 7 that accommodates the filtering material.

### LIST OF REFERENCE NUMERALS

- 1: device for treating a liquid

- 3: funnel

- 5: cup

- 7: filter cartridge
- 8: filter unit
- 9: jug

- 30: side wall
- 31: upper edge
- 32: central opening
- 33: bottom
- 34: radial recess in bottom 33
- 35: insertion bevel
- 36: stop
- 37: lid
- 38: cover

- 300: connecting member

- 40: sealing
- 41: sealing lips of sealing 40

- 50: side wall
- 51: bottom
- 52: upper edge
- 53: insertion groove
- 54: locking groove
- 54a: bevel
- 54b: bevel
- 55: axial depression
- 56: tangent to locking groove 54
- 57: protrusion

- 500: outlet opening

- 505: connecting member

- 70: side wall
- 71: lid
- 72: flange
- 73: radial projection
- 74: transverse web
- 75: axial web
- 76: radial projection of axial web 75
- 77a: inlet opening
- 77b: venting opening
- 78: recess
- 79: protruding inner wall

- 701: inlet

- 703: filtering material

- 705: first connecting piece
- 706: second connecting piece

- 90: side wall
- 91: bottom
- 92: spout
- 93: cover
- 94: closure

- h1: distance between upper edge 52 of locking groove 54
- h2: distance between axial web 75 and upper side of flange 72

- z: central axis

## Claims

1. A device (1) for the filtration of a liquid, comprising a funnel (3) for collecting the liquid to be filtered, a filter cartridge (7) having a filtering material for filtering the liquid and a cup (5), said filtering device (1) comprising first connecting members (76, 705) configured for directly connecting the filter cartridge (7) detachably to a lower end of the funnel (3) in a form-fitting manner,
**characterized in that**
the filter cartridge (7) is accommodated in the cup (5), and
the filtering device (1) further comprises second connecting members (73, 706) configured for directly connecting the cup (5) detachably to the filter cartridge (7) in a form-fitting manner for forming a filter unit (8) so that the filter unit (8) is held in an operating position at the lower end of the funnel (3) by the first connecting members (76, 705).

2. The device as claimed in claim 1, wherein
the first connecting members comprise first connecting pieces (76, 705) provided at an upper end of the filter cartridge (7) and corresponding first connecting counter pieces (34, 300) provided at the lower end of the funnel (3), which are configured to cooperate with the first connecting pieces (76, 705) in a form-fitting manner, for directly connecting the filter cartridge (7) detachably to the lower end of the funnel (3) in a form-fitting manner.

3. The device as claimed in claim 2, wherein
the second connecting members comprise second connecting pieces (73, 706) provided at the upper end of the filter cartridge (7) or on a side wall (70) of the filter cartridge (7) and corresponding second connecting counter pieces (54, 505) provided in a side wall (50) of the cup (5), which are configured to cooperate with the second connecting pieces (73, 706), for directly connecting the cup (5) detachably to the filter cartridge (7) in a form-fitting manner to form the filter unit (8).

4. The device as claimed in claim 2 or 3, wherein
the upper end of the filter cartridge (7) is formed integrally as a lid (71), wherein the lid (71) covers the upper end of the filter cartridge (7) and comprises openings (77a) through which the liquid to be filtered can flow out of the funnel (3) into the filter cartridge (7).

5. The device as claimed in claim 4, wherein
the first connecting members (76, 34) and the first connecting counter pieces (34, 300) are configured for latching the filter cartridge (7) to the funnel (3), so that the filter cartridge (7) is directly connected to the lower end of the funnel (3) in the operating position in a rotationally fixed manner and/or at a fixed axial position, and/or
the second connecting members (73, 54) and the second connecting counter pieces (54, 505) are configured for latching the filter cartridge (7) to the cup (5), so that the filter cartridge (7) is directly connected to the cup (5) in the operating position in a rotationally fixed manner and/or at a fixed axial position.

6. The device as claimed in claim 5, wherein
the first connecting pieces and the first connecting counter pieces are formed as a first plug-in/rotary connection device (76, 33, 34) configured for connecting the filter cartridge (7) to the lower end of the funnel (3) by pushing the filter cartridge (7) to the lower end of the funnel (3) and performing a rotation, and/or
the second connecting pieces and the second connecting counter pieces are formed as a second plug-in/rotary connection device (73, 53, 54) configured for connecting the filter cartridge (7) to the cup (5) by pushing the cup (5) to the filter cartridge (7) and performing a rotation, wherein
the first plug-in/rotary connection device (76, 33, 34) and the second plug-in rotary connection device (73, 53, 54) are configured such that, after the filter cartridge (7) has been inserted into the cup (5), by performing a relative rotation between the funnel (3) and the cup (5) the filter cartridge (7) can be transferred from a non-locked initial position into a locked operating position, in which the filter cartridge (7) is locked to the lower end of funnel (3), and
the relative rotation between the funnel (3) and the cup (5) simultaneously transfers the cup (5) from a non-locked initial position to a locked operating position in which the filter cartridge (7) is locked to the cup (5).

7. The device as claimed in claim 5 or 6, wherein
the first connecting pieces comprise a first number n of first radial projections (73) formed on the lid (71), where n is an integer greater than or equal to 2, and
the non-locked initial position of the filter cartridge (7) is defined by n axial grooves (53) in the side wall (50) of the cup (5), which each have a predetermined length (h1), and wherein
the second connecting pieces comprise a second number m of second radial projections (76) formed on an upper side (72) of the lid (71), m being an integer greater than or equal to 2, the m second radial projections (76) projecting by a predetermined distance (h2) from the upper side (72) of the filter cartridge (7), wherein
the predetermined distance (h2) corresponds to the predetermined length (h1) or is slightly smaller.

8. The device as claimed in claims 6 or 7, wherein
the second connecting counter pieces are formed as grooves (53, 54) in the side wall (70) of the cup (5), and
the first connecting counter pieces are formed as recesses (34) in the lower end (33) of the funnel (3),
wherein the grooves each comprise an axial insertion groove (53) and a latching groove (54) extending perpendicular to the axial insertion groove (53).

9. The device as claimed in claim 8, wherein
each latching groove (54) comprises two adjacent oppositely slanted bevels (54a, 54b) with a vertex (57) formed between the two adjacent oppositely slanted bevels (54a, 54b), and/or
each recess (34) in the lower end (33) of the funnel (3) is limited by a stop member (36) at a first end thereof protruding from the lower end (33) of the funnel (3) in an axial direction and by an oblique insertion bevel (35) formed at a second end thereof opposite to said first end.

10. The device as claimed in any of the preceding claims, wherein in the operating position a sealing (40) is clamped between the lower end (33) of the funnel (3) and the upper end of the filter cartridge (7), for sealing the filter cartridge (7) against the environment.

11. A filter cartridge (7) for a device (1) for the gravity-operated filtration of a liquid, which comprises a funnel (3) for collecting the liquid to be filtered and a cup (5) for accommodating the filter cartridge (7) therein, wherein
a filtering material (703) is provided in the filter cartridge (7) for filtering the liquid to be filtered, and
the filter cartridge (7) comprises first connecting members (76, 705) configured for directly connecting the filter cartridge (7) detachably to a lower end of the funnel (3) in a form-fitting manner,
**characterized in that**
second connecting members (73, 706) are provided on the filter cartridge (7) configured for directly connecting the filter cartridge (7) to the cup (5) detachably in a form-fitting manner for forming a filter unit (8) so that the filter unit (8) is held in an operating position at the lower end of the funnel (3) by the first connecting members (76, 705).

12. The filter cartridge as claimed in claim 11, wherein
the first connecting members (76, 705) and the second connecting members (73, 706) are provided at an upper end of the filter cartridge (7).

13. The filter cartridge as claimed in claim 12, wherein
the upper end of the filter cartridge (7) is formed integrally as a lid (71), wherein the lid (71) covers the upper end of the filter cartridge (7) and comprises openings (77a) through which the liquid to be filtered can flow out of the funnel (3) into the filter cartridge (7).

14. A use of a filter cartridge (7) as claimed in any of claims 11 to 13 in a device (1) for the filtration of a liquid, which comprises a funnel (3) for collecting the liquid to be filtered and a cup (5) for receiving the filter cartridge (7) therein, wherein a filtering material for filtering the liquid to be filtered is provided in the filter cartridge (7), comprising
inserting the filter cartridge (7) into the cup (5), and
inserting the filter unit (8) into a lower end of the funnel (3), wherein
the filter cartridge (7) is directly connected to the cup (5) detachably and in a form-fitting manner by the first connecting members (76, 705) to form a filter unit (8), and
the filter cartridge (7) is directly connected to a lower end (33) of the funnel (3) detachably and in a form-fitting manner by the first connecting members (76, 705), so that the filter unit (8) is held in an operating position at the lower end of the funnel (3).

15. The use as claimed in claim 14, wherein
by performing a relative rotation between the funnel (3) and the cup (5), the filter cartridge (7) is transferred from a non-locked initial position into a locked operating position, in which the filter cartridge (7) is locked with the funnel (3), and
by performing the relative rotation, the cup (5) is simultaneously transferred from a non-locked initial position to a locked operating position, in which the filter cartridge (7) is locked with the cup (5).
